# EUROPEAN PATENT SPECIFICATION

(11) **EP 3 689 539 B1**
(45) Date of publication and mention of the grant of the patent: **22.06.2022**
(21) Application number: 20153566.3
(22) Date of filing: 24.01.2020
(51) Int. Cl.: B23Q 7/14, B25J 19/00, B65G 61/00, B25J 9/00

(54) **MODULAR PLATFORM**
MODULARE PLATTFORM
PLATEFORME MODULAIRE

(30) Priority: 01.02.2019 GB 201901422
(43) Date of publication of application: 05.08.2020
(73) Proprietor: Granta (Group) Limited, Cambridge, Cambridgeshire CB22 4XL (GB)
(72) Inventor: SMITH, David, Cambridge, Cambridgeshire CB22 4XL (GB); HETHERINGTON, Ryan, Cambridge, Cambridgeshire CB22 4XL (GB); Roger, MARSH, Cambridge, Cambridgeshire CB22 4XL (GB); MARSH, Derek, Cambridge, Cambridgeshire CB22 4XL (GB); YATES, Justin, Cambridge, Cambridgeshire CB22 4XL (GB); MARSH, Mark, Cambridge, Cambridgeshire CB22 4XL (GB); MARSH, Joseph, Cambridge, Cambridgeshire CB22 4XL (GB); MARSH, John, Cambridge, Cambridgeshire CB22 4XL (GB); MARSH, Matthew, Cambridge, Cambridgeshire CB22 4XL (GB)
(74) Representative: CSY London

(56) References cited:
- CN-A- 110 512 057
- US-A1- 2009 012 642
- US-A1- 2012 215 354
- US-A1- 2013 017 041
- US-B1- 7 325 667

## Description

The present invention relates to components for forming a modular assembly which can act as a base for a portion of a production-line. **More particularly the invention relates to a platform for supporting a production-line component according to claim 1 and an array comprising two or more of such platforms which are connected together.**

With the development of robotic arms, many production line processes that were previously carried out by humans are being automated. Such processes include bagging of product, packing of product into boxes, stacking boxes of product on pallets and weighing of product.

Conventionally, robots and apparatus for delivering product to the robots have been bolted directly to a factory floor. This requires a bespoke installation and preparation of the factory floor. Holes need to be drilled in the factory floor at the correct locations to mount robots and apparatus securely to the floor. This type of system is slow to install. It is also difficult to modify the arrangement due to the permanent nature of the fixings to the factory floor.

Recently, modular systems have been introduced which act as a base for a production line. These systems comprise a number of tessellating platforms which are connected to one another to form an array. A robot and apparatus for delivering product to/from the robot may be mounted on the platforms rather than to the factory floor. The fixings to mount the robot and apparatus on the platforms are removable, and the components on the array may therefore be rearranged to change the layout of a production line or expand the production line. One such system is manufactured by Premier Tech Ltd. of Little Gables, Church Close, Clevedon Road, Weston-In-Gordano, North Somerset, BS20 8PZ. The system is marketed as the RPM Series Modular Palletizer.

**Document** US 2009/012642 A1 **discloses a modular transfer system for workpieces, wherein the modules can be connected together to form an array.**

It is amongst the objects of the invention to provide components which enable an improved installation or improved use of a modular system. The installation or use may be safer, faster, or more convenient than present systems.

**According to the** invention there is provided a platform for supporting a production-line component **according to claim 1,** comprising;
a base for supporting the platform on a floor surface,
a load bearing surface for supporting a production-line component,
a cable tray between the load bearing surface and the base, and
connecting means for connecting the platform to a second identical platform to form an array.

The cable tray can accommodate cables which are connected to production-line components mounted on the load bearing surface of the platform. This improves the speed of installation of the system as cables do not need to be tidied and stowed separately.

The cable tray may be permanently open, such that cables may be dropped into the tray without the removal of a lid or covering. The platform defines a channel which forms an opening to the cable tray. This enables cables to be quickly introduced into the cable tray. The channel nature of the cable tray may also allow cables to be introduced at any point along the length of the channel, not just at specified apertures which provide access to the cable tray, for example apertures in a lid. This provides faster installation and/or modification of the system.

**According to the invention, the** opening to the cable tray is formed by a gap between edges of load bearing surfaces of adjacent platforms in an array of identical platforms. The width of the gap may be less than 150 mm, or less than 120 mm or less than 100 mm. Preferably the gap is between 150 mm and 20 mm wide. More preferably the gap is between 120 mm and 40 mm wide. More preferably the gap is between 100 mm and 60 mm wide. This enables cables to be moved in and out of the cable trays, without the need to provide a protective cover.

The cable tray may be provided with an opening for depositing cables into the tray or removing cables from the tray. This opening may be formed between the edge of the load bearing surface and an upper edge of an upstanding sidewall of the cable tray. The width of this opening may be less than 75 mm, or less than 60 mm or less than 50 mm. Preferably this opening is between 10 mm and 75 mm wide. Preferably the width of this opening is between 20 mm and 60 mm wide. Preferably the width of this opening is between 30 mm and 50 mm wide. This opening may be channel shaped. The channel may run along one side of the platform.

**According to the invention, when** When the platform is connected to a second identical platform in a tessellating arrangement, the load bearing surfaces of the platforms define an opening through which cables may be introduced into, and removed from, the cable tray. This opening means that the apertures providing access to the cable tray will be in a regular arrangement throughout an array of platforms. This ensures that a user will always know where a cable tray is located. It may also ensure that a regular network of interconnecting cable trays is formed when a number of platforms are arranged in a tessellating arrangement.

**According to the invention, the load bearing surface comprises** a portion which overhangs at least a portion of the cable tray. The overhanging portion may provide improved protection for cables located in the cable tray, whilst still permitting a permanently open aperture to access the cable tray. The overhang also enlarges the area of the supporting surface which a user may walk on, or to which production-line components may be mounted, whilst maintaining the protection of cables in the cable tray. Connecting means such as holes may be provided on the overhanging portion of the load bearing surface. This provides connecting means, the underside of which may be accessed easily when the platform is installed.

The platform may be generally square, rectangular, triangular or hexagonal. These shapes tesselate with one another and are therefore useful in providing an easily installed array. The cable tray may run generally parallel to an outer edge of the load bearing surface. The base may comprise the connecting means. This can provide improved rigidity to the system.

The cable tray may comprise an aperture arranged to allow a user to access to the connecting means when the platform is brought together in a tessellating arrangement with a second identical platform. This improves the speed of installation of the system. The aperture may be a generally square or circular shape. The aperture allows a user to fasten connecting means to the platform to attach it to a second platform. For example, in the case where the platform is provided with holes as connecting means, an installer will need to slot a bolt through a hole in a first platform, optionally through a connecting bracket, and then through a corresponding hole in a second platform. A nut may be applied to the bolt and the aperture in the cable tray may be arranged to provide access for tools such as a spanner to tighten the bolt connection.

The connecting means may be located at, or near to, a corner of the platform. This reduces the number of connections between adjacent platforms in an array that need to be made for the array to have sufficient rigidity to accommodate production-line components.

One or more struts may be attached to the load bearing surface. Production-line components may be slidably mounted on the one or more struts. This allows flexible mounting and avoids the need to provide specific holes on the supporting surface for accommodating specific production-line components. Preferably the strut is a strut sold under the product reference P1000 by Atkore International under the brand name Unistrut^{®}.

The cable tray may comprise an aperture through which excess cable may be fed, wherein the aperture is arranged so that excess cable which is fed through the aperture may be stowed under the load bearing surface. This allows the use of standard cables to connect components on the supporting surface, rather than bespoke length cables. The aperture may be in a base or a sidewall of the cable tray.

The load bearing surface may comprise a cutaway portion to provide improved access to the connecting means and/or the cable tray when the platform is connected to a second identical platform in a tessellating arrangement. For example, when the load bearing surface is generally square, rectangular, triangular or hexagonal, the corners of those shapes may be cut-away/truncated.

The connecting means may comprise holes which are threaded. This allows a threaded bolt to be used to connect two platforms together, without the need for a nut. This is advantageous because access to both sides of a nut and bolt arrangement is not always easy when installing a new platform to sit alongside an existing platform which already has a full cable tray. This is because the full cable tray might hinder access to one side of the connecting means through which the nut/bolt arrangement passes.

The cable tray may have an upstanding sidewall which, when the platform is connected to a second identical platform in a tessellating arrangement, abuts the sidewall of the second identical platform. The upstanding sidewall provides protection to cables in the cable tray as it stops them from falling out of the cable tray. The sidewall may also act as a further contact surface between adjacent platforms when an array is formed. The upstanding sidewall of the cable tray may comprise connecting means for connecting the sidewall to the sidewall of an identical second platform, or to support brackets for a guard rail or other components. This improves the rigidity of the array.

The cable tray may comprise a base and two sidewalls for retaining cables. The connecting means may be holes. The base of the cable tray may be between 20 mm and 200 mm wide. Preferably the base of the cable tray is between 50-150 mm wide.

**According to the invention, the cable tray runs** around the perimeter of the platform. When an array is formed, this provides a regular arrangement of adjacent cable trays. This means that cable can pass easily from one cable tray to another, throughout the array, to their final destination, for example a remote power source.

**A second aspect, which is not according to the invention claimed in the appended claims and is presented for illustration purposes only, concerns** a bracket for connecting together at least two platforms for supporting production-line components, comprising;
a support plate,
a leaf which depends from the support plate, wherein the leaf comprises connecting means for connecting the bracket to at least two platforms,
wherein the support plate is provided with connecting means for connecting a component to the support plate.

In use, the leaf of the bracket may be slotted between two adjacent platforms and the platforms may be connected to the connecting means, for example holes, on the leaf. The presence of a support plate with connecting means allows a component such as a guard rail to be attached to the same component as the one which secures platforms in the array to one another. This dual-purposing of the bracket allows a single bracket to be used to make all of the connections between all of the platforms, ensuring that a guard rail can be attached to any of the nodes between platforms. This avoids the need to provide or change a separate guard rail bracket when an array of platforms is rearranged in a way which necessitates a change in position of a guard rail. Mounting a guard rail on the connecting brackets also enables the use of a platform which does not require separate guard rail mounts along its edges. This avoids the potential for guard rail mounts to interfere with the connection or rearrangement of adjacent platforms. It also speeds up the assembly of an array of platforms.

The bracket may comprise two, three or four leaves, each of which comprises connecting means for connecting the bracket to at least two platforms. These arrangements may be advantageous for using triangular or hexagonal platforms.

The support plate may be shaped to allow a user to access to connecting means on a leaf when the leaf is located between two platforms. The support plate may be a polygonal shape with cut-away/truncated corners. The support plate may be generally square, circular, hexagonal or octagonal.

The connecting means on the support plate may be aligned with a leaf, or each leaf. This provides a rigid system in which the load from a component on the support plate is aligned with the rigidity provided by the leaf or leaves. Since the leaves also, in use, sit between two platforms, it also allows a component installed on the support plate to be aligned with the edge of a platform. This is particularly useful when the component to be installed on the support plate is a guard rail.

The leaf may have a cut-away portion to allow a user to access to mounting means on the support plate, when the leaf is located between two platforms. This assists in the installation of a component on the support plate when the bracket is already connected to two or more platforms. The cut-away portion may allow a user to access the underside of the support plate to connect a nut and bolt to the support plate.

The leaf, or each leaf, may be generally L-shaped. This allows the narrower portion of the L shape to correspond to the cross section of a cable tray in a platform when the bracket is disposed between two platforms. This shape prevents the leaf from blocking a cable tray when in use. Preferably a narrow portion of the, or each, leaf is connected to the support plate and a relatively wider portion of the leaf which is distal to the support plate is provided with the connecting means.

Preferably the bracket comprises leaves which define planes which are perpendicular to one another. This enables the formation of a regular array of platforms.

Preferably, the bracket has a depth which corresponds to the height of the platforms with which it is intended to be used. This means that the bracket is load bearing and that the weight of a guard rail which his installed upon the support plate is transmitted directly to the floor, rather than through the platforms of the array. This provides a robust and stable array.

When the bracket comprises four leaves, the leaves may be formed from two plates which comprise a slot. During production, the slots may be fitted together and connected to the support plate, for example by welding. **A bracket as described herein may be manufactured** by fitting together two plates which comprise a slot and fixing them to the support plate. The presence of a slot in one or more plates which form the leaves provides an assembly in which the leaves are, by default, perpendicular to one another. This provides an easier method of manufacture than would be the case if four separate leaves were joined together. Preferably the leaves are only connected to the support plate at their upper edges.

Connecting means for connecting a component to the support plate may be arranged so that the component which is connected to the bracket is upstanding from the support plate. The component, once attached, may be on the opposite side of the support plate to the leaf or leaves. The component may be a guard rail, or a post for a guard rail.

In a further aspect of the invention, there is provided an array comprising two or more platforms as described herein which are connected together.

An array comprising two or more platforms may be connected together by a bracket, or brackets, as described herein. The two or more platforms may be as described herein.

The leaf, or each leaf, of the bracket, or of the brackets, may have a cutaway portion which, when attached to one of the platforms, conforms to a cross section of the cable tray.

In the array automated machinery may be supported on one of the platforms. In the array a robot may be supported on one or more of the platforms. The robot may be a 5-axis robot or a 6-axis robot. The robot may be a palletizer robot. In the array, a post for a guard barrier may be connected to the support plate of a bracket. In the array, a plurality of posts for a guard barrier and a guard barrier may be connected to the brackets so that the guard barrier runs around a perimeter of the array.

Embodiments of the invention will now be described with reference to the figures of the **drawings. The brackets are not claimed in the present invention and are presented for illustration purposes only.**
Figure 1 shows a perspective view of a production line based on an array in accordance with the invention.
Figure 2 shows a perspective top view of a bracket.
Figure 3 shows a perspective bottom view of the bracket shown in figure 2.
Figure 4 shows an exploded perspective view of the components of the bracket shown in figure 2.
Figure 5 shows a top perspective view of a platform in accordance with the invention.
Figure 6 shows a detailed view of a corner portion of the platform shown in figure 5.
Figure 7 shows an exploded perspective view of the components of the platform shown in figure 5.
Figure 8 shows a perspective bottom view of the platform shown in figure 5.
Figure 9 shows a plan view of a portion of the apparatus shown in figure 1.
Figure 10 shows a view of the underside of the apparatus shown in figure 1.
Figure 11 shows a side perspective view of a portion of the apparatus shown in figure 1.

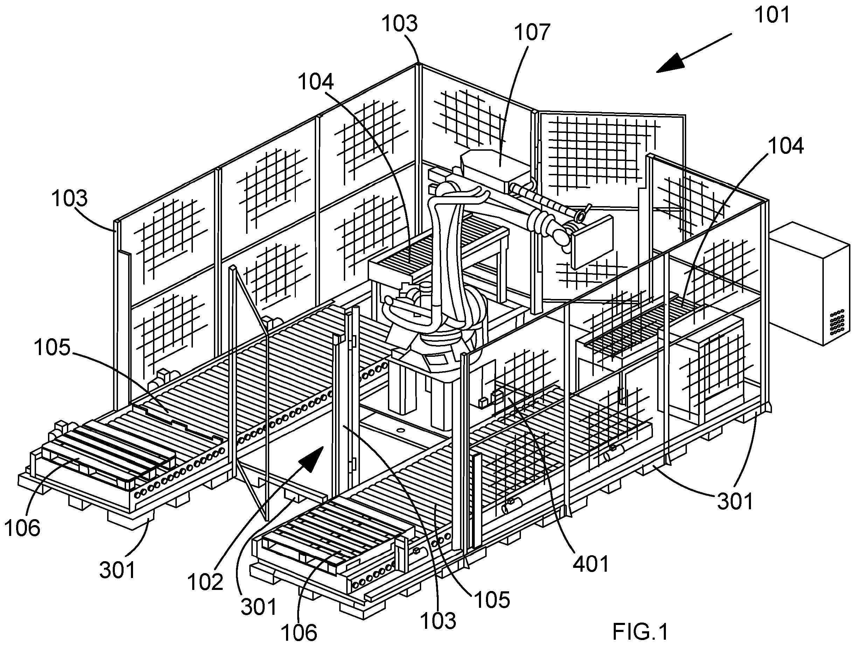

Figure 1 shows a production line 101. The production line comprises a space 102 for accommodating a stock of empty pallets. The space is adapted to store a stack of pallets. Two raised roller conveyors 104 are provided. Two further roller conveyors 105 are provided at a lower level than the raised roller conveyors. The raised roller conveyors 104 have a narrower width than the roller conveyors 105. The roller conveyors 105 have a width which corresponds to a conventional wooden pallet. Wooden pallets 106 are shown at the ends of the conveyors 105. A robot 107 is provided between the roller conveyors 105, the stack 102 and the raised roller conveyors 104.

All of the components of the production line, including the roller conveyors 105 and 104, the robot 107, and the corner posts 103 are connected to platforms 301,401 which are in turn connected to each other.

In use the roller conveyors 104 convey boxes of product towards the robot 107. The robot removes a pallet from the pallet stack 102 and places it on the end of the roller conveyor 105 which is nearest to the raised roller conveyor 104. The robot 107 then removes boxes from the raised roller conveyor 104 and places them onto the pallet on the roller conveyor 105. This is repeated until the pallet has been fully stacked with boxes. The pallet is then conveyed along the roller conveyor 105 to a further stage of the production line.

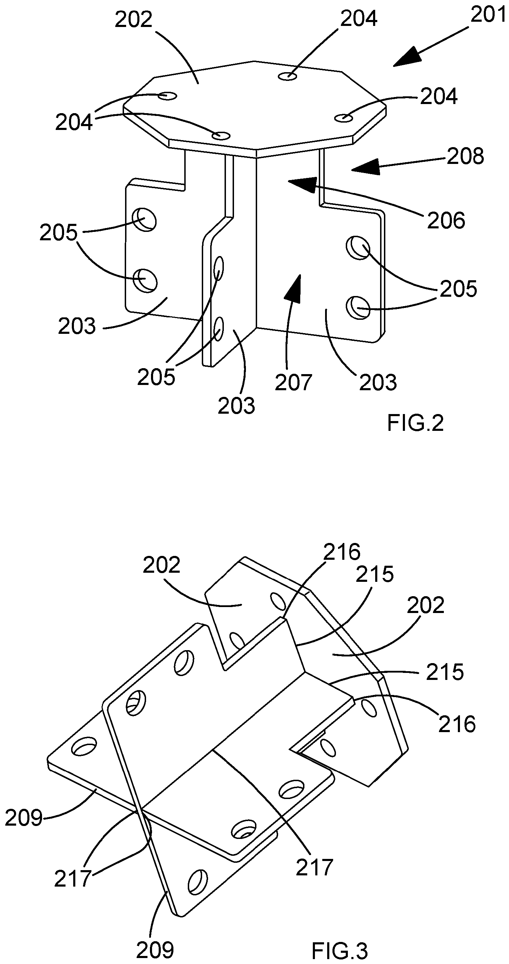

Figure 2 shows a bracket 201 for joining together platforms which are used to form the base of a system of the type shown in figure 1. All components of the bracket are made of metal.

The bracket has a flat upper plate 202 which has an octagonal shape. Four leaves 203 are attached to the underside of the upper plate 202. Each leaf is arranged at 90 degrees to two adjacent leaves. The upper plate is provided with 4 holes 204. Each hole is located directly above a leaf.

In use, two platforms are placed alongside one another for connection and a leaf of the bracket is inserted between the platforms. The platforms are generally provided with holes which are aligned with the holes 205 on a leaf of the bracket. A connector is inserted through the holes on the platforms and bracket and secured, so as to connect the two platforms together. This process is repeated until the desired array of platforms has been created. In an array the brackets will sit at the corners of the platforms. In an array formed of square platforms, a bracket which is not at the edge of the array will abut 4 different platforms. A bracket which is at an edge of the array may abut either two or three platforms. The leaves are each provided with two holes 205, one above the other, to enhance the rigidity of the array once it has been assembled.

In other **examples,** the bracket may be intended for use with triangular or hexagonal platforms. The bracket may therefore be provided with 6 leaves or three leaves respectively. In the case of a **six-leaf bracket** embodiment for use with triangular platforms, the angle between the leaves will be 60 degrees. In the case of a three-leaf bracket for use with hexagonal platforms, the angle between each leaf is 120 degrees.

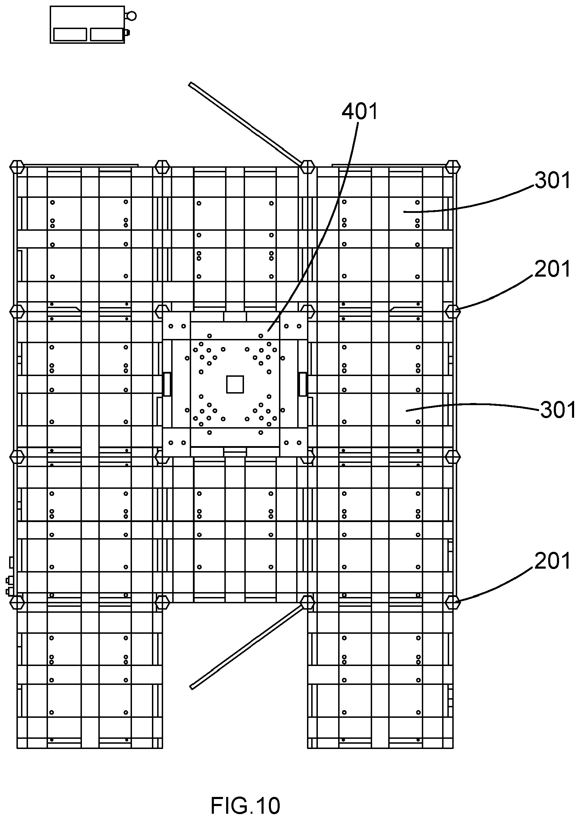

The holes 204 provided in the upper plate 202 allow a user to connect a guard rail to the bracket. This is shown in figures 10-12. Conventionally, separate fixings needed to be provided on platforms to affix a guard rail to the platform. By affixing the guard rail, or a post for a guard rail, to the bracket itself, installation of the system is speeded up. Equally, since the brackets are used at the joins between each corner of each platform in the system, around the perimeter of the system there will always be a suitable site for installing a guard rail. An additional advantage is that if the guard rail is only intended to encompass a small portion of a large array of platforms, there will always be an accessible, robust and rigid site for installing a guard rail, without the need for installing further components on the platform. This is because the brackets are distributed regularly throughout the array.

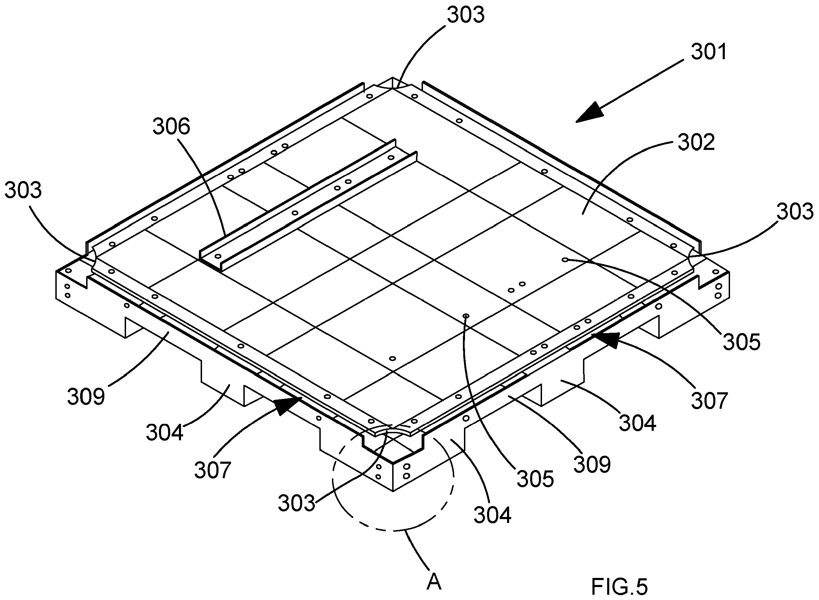

In the **bracket** shown, each of the leaves is generally L-shaped. This means that the portion 206 of each leaf which is joined to the upper plate 202 is narrower than a lower portion 207 of the leaf. **According to the** invention there is provided a platform, an embodiment of which is described in figures 5 to 11. When the bracket 201 is used with such a platform, the 'cut-out' portion 208 of the L-shapes leaf sits between two platforms and ensures that a cable tray running around the perimeter of the platforms is not blocked (as would be the case if the leaf were simply a rectangular plate having the width of the lower portion 207 of the L-shape).

Other shapes of cut-out 208 in the leaves could also be used, for example the cut-out 208 may have a cross-section with a curved, or semi-circular or polygonal shape.

Figure 3 shows that the lower ends 209 of the leaves are flat and have a cross-shaped arrangement when viewed from below. In some brackets the distance from the lower end of the leaves 209 to the upper plate 202 is such that when the bracket is installed between 2 or more platforms, the lower ends 209 of the leaves contact the floor on which the platforms are installed. This means that the bracket is load bearing and that the weight of a guard rail which is installed upon the upper plate 202 is transmitted directly to the floor, rather than through the platforms of the array. This provides a robust and stable array.

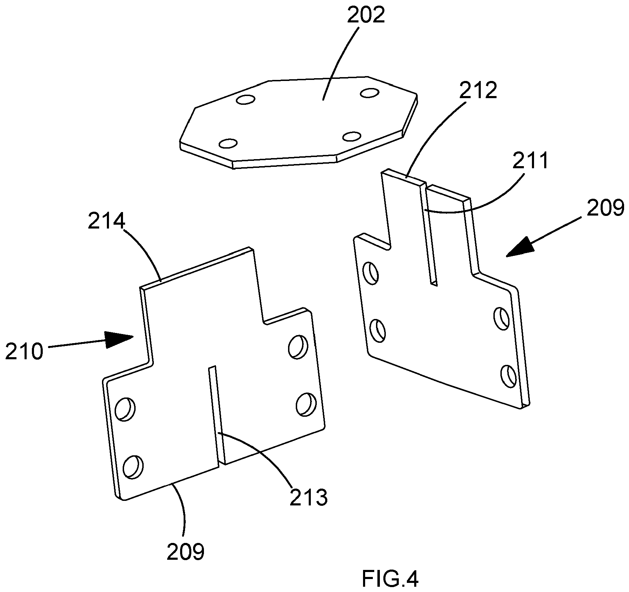

Figure 4 shows an exploded view of the components of the bracket prior to assembly. The four leaves are formed by connecting two T-shaped plates 209 and 210. One plate 209 is provided with a slot 211 which meets, and runs perpendicular to, an upper edge 212 of the plate 209. The other plate 210 is provided with a slot 213 which meets, and runs perpendicular to, a lower edge 209 of the plate. To assemble the bracket, the two slots are engaged with one another. The upper edges 214, 212 of the plates 209, 210 are then welded to the upper plate 202.The upper edges 214, 212 are only welded along eight seams 215, two of which are shown in figure 3. The pates 209 and 210 are not welded along the four seams 216, two of which are shown in figure 3. The plates 209 and 210 are not welded along the four seams 217, one of which is shown in figure 3.

Figure 5 shows a platform 301 in accordance with the invention. The platform is provided with a flat, generally square supporting surface 302. The supporting surface is affixed to cross members 304. The lower ends of the cross members contact the floor upon which the platform is located. Between the cross members 304 there are spaces through which the forks of a forklift truck may be inserted to lift and transport the platform. The support surface is provided with holes 305 for connecting a component to the platform. The component may be, amongst other things, a roller conveyor or a robot. The top surface is also provided with a connection strut 306. The connecting strut is affixed to the supporting surface 302 by connectors such as bolts which are attached to holes on the surface. The connecting strut is a strut sold under the product reference P1000 by Atkore International under the brand name Unistrut^{®}. The strut allows components to be slidably mounted to the supporting surface. This avoids the need for providing many specific hole configurations on the platform to accommodate many different types of apparatus.

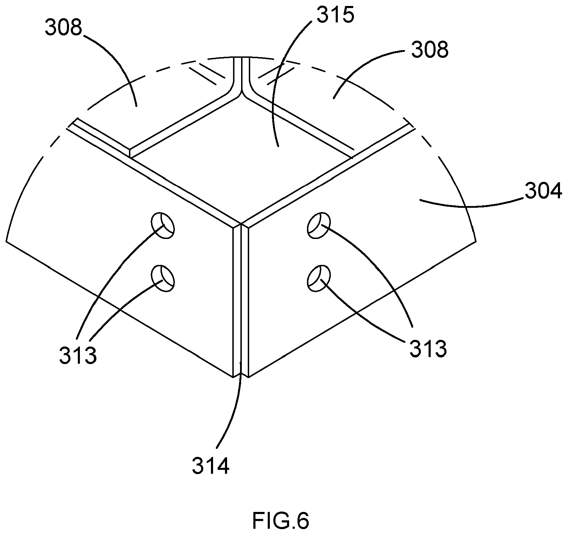

A detailed view of the portion marked A in figure 5 is shown in figure 6.

A cable tray 307 is situated between the supporting surface and the portions of the cross members 304 which contact the floor.

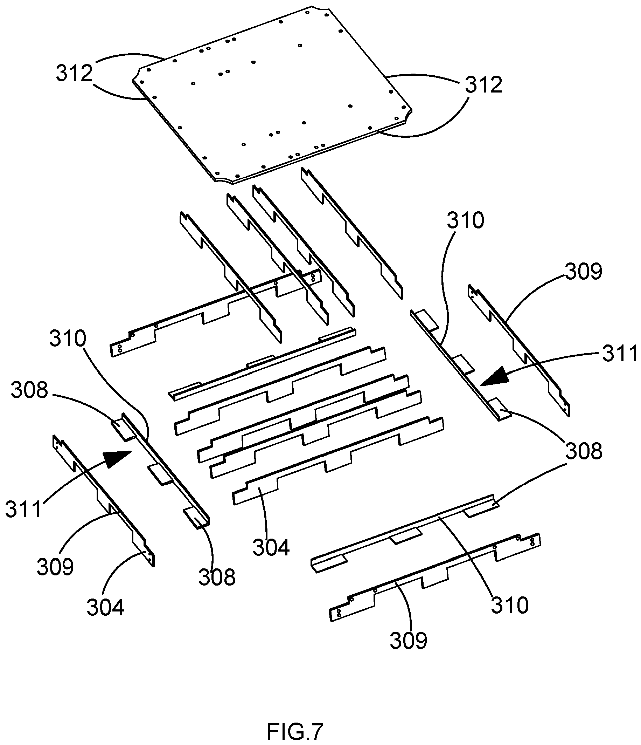

Figure 7 shows an exploded view of the components which are assembled to form the platform. The components which form the cable tray are more easily seen in this figure. The cable tray is formed as a channel comprising a base 308, and two upstanding sidewalls 309 and 310. Cables from electrical equipment which is installed on the platform may be fed into the cable tray channel via the opening between the edge of the supporting surface and the upper edge of the upstanding sidewall 309. The cable tray runs around the whole perimeter of the platform. The base 308 of the cable tray is located above the floor and below the height of the supporting surface 302. The base of the cable tray has spaces 311.This allows excess length of cable which is stowed in the cable trays to be fed through the spaces, out of the cable tray, and under the platform. This stowing of excess cable length allows a user to only use standard cable lengths rather than having to provide bespoke cable lengths for a particular production line arrangement. Without the ability to deal with excess cable, the cable tray would become too full. Sidewall 309 is arranged such that when the platform is bought together in a tessellating manner with a second identical platform, the sidewall 309 abuts an identical sidewall in the second platform. The gap between the top of the sidewall 309 and the edge 312 of the supporting surface is around 50 mm wide. The platform is not provided with a lid or fitting to cover the opening between the top of sidewall 309 and the edge 312 because adequate protection is provided to cables in the tray by the overhanging portion of the supporting surface 302. This simplifies the construction and lowers the cost of the cable platform. The fact that the platforms are provided with holes, or connecting means more generally, for attaching the platform to a second identical platform means that no rearrangement of existing platforms in an array is required when it is desired to increase the size of the platform. This is an advantage of the present design over designs in which the platforms themselves interlock with one another. Interlocking platform designs often require the movement of an existing platform in order to engage interlocking features on the existing platform and on a platform, which is being added to the array. Moving existing platforms is often difficult when a heavy robot, or component is already located on the platform.

All four edges 312 of the supporting surface 302 overhang the cable tray 307. This provides protection for cables stowed within the trays, whilst allowing a user to easily add and remove cable to the trays when the system is installed and/or modified to accommodate a different production line arrangement.

Figure 6 shows that at each corner 314 of the platform, the cross members 304 are provided with four holes 313 for connecting the platform to an adjacent platform, optionally via a bracket or another connector. The holes are provided in sets of two, each set being on opposite sides of the corner. One hole in each set is positioned directly above the other hole. The holes are threaded to enable a user to screw a bolt directly into the platforms to connect them, without the need for a nut and bolt connector. This provides a faster installation by reducing the amount of access required to all of the connection holes. That is, an installer does not require access to both sides of the connection holes because a single bolt can be threaded through the holes from one side. In some embodiments, holes provided on the load bearing surface are threaded.

The base 308 of the cable tray 307 is provided with a cut-out 315 at each of the corners of the platform.

The corners of the support surface 302 have semi-circular cut-outs 303. When a user drops a bracket into the space between two platforms when they are brought together, the cut-outs provide improved access to the holes 313 on the platform. This assists in easily connecting the platforms together. The cut-outs 303 also enable cables to be removed and introduced into the cable tray, even when a bracket having a mounting plate for a guard rail is located between the platforms to join them together. A bracket which may be used with the platforms described herein is the bracket shown in figures 2-4 and described herein.

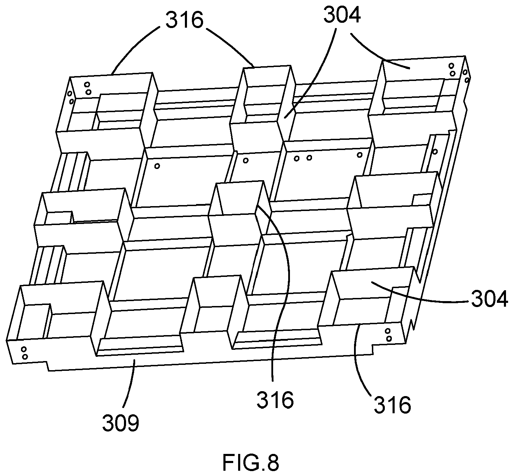

Figure 8 shows a view of the underside of the platform shown in figure 5. The cross members 304 have lower edges which form base portions 316 which contact the floor on which the platform rests. The sidewalls 309 of the cable tray 307 do not run at their full height along the full length of the sides of the platform. The sidewalls 309 terminate before they reach the corners 314 of the side of the platform along which they run. The point at which the sidewalls terminate corresponds the point, or just before the point, which is adjacent to cut-out 315. The fact that the sidewalls 309 do not run the whole length of the platform ensures that when two identical platforms are brought together, cables in the cable tray 307 of one platform may run directly into the cable tray of another platform, without being blocked. The base portions 316 do not extend all the way across the platform. This improves stability and reduces the weight and cost of the components which make up the platform.

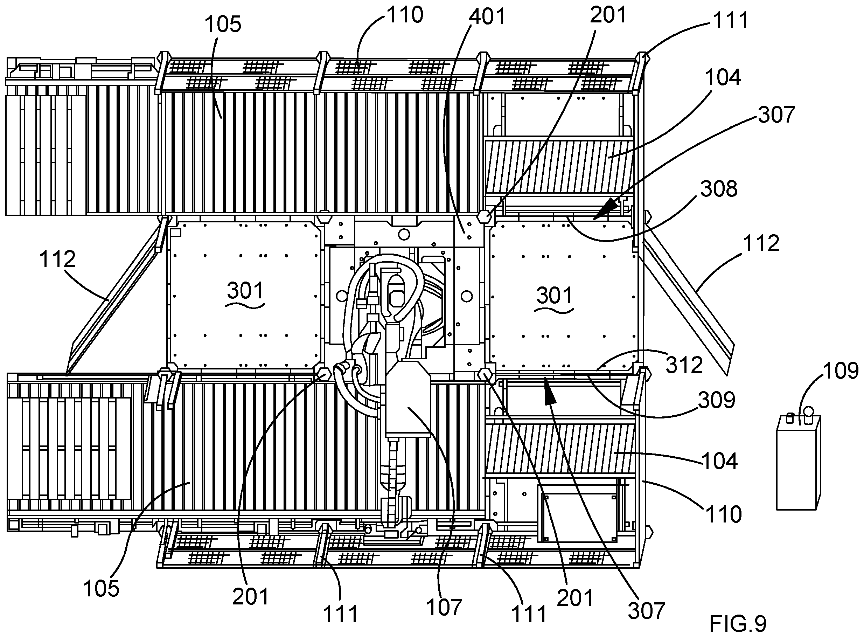

Figure 9 shows a plan view of the apparatus shown in figure 1. Three platforms 301 and 401 are clearly shown in an array connected by brackets 201. Other platforms in the array are less clearly shown as they are obscured by the components such as the robot 107 and roller conveyors 104, 105 which are mounted thereon. The production line is provided with the control panel 109which is located away from the production line. The production line is surrounded by a guard rail 110which is supported by guard rail posts 111. At two points around the perimeter of the production line, the guard rail is provided with doors 112 to enable an operator to temporarily access the production line.

The platform 401 which accommodates the robot 107 has generally the same features as the platforms 301, such as the cable tray and overhanging portion. However the platform 401 has a thicker supporting surface which is made of metal. The corners of the platform 401 which correspond to the cut-outs 315 on the platforms 301, are sunken further from the supporting surface and are closer to the floor than the cut-outs 315. The corners are also provided with connecting means for connecting the platform directly to a floor surface. This is useful to ensure a solid base for the robot, which may exert large torques on the platform when in use. It also enables other platforms 301 in the array to be anchored securely via the brackets 201 to secured platform 401. The whole array thereby takes its strength from the robot platform 401.

The brackets 201 are the brackets shown in figures 2-4. They are located between four adjacent platforms. The upper plate 202 sits at the same height above the floor as the support surface 302 of the platforms. The gap between the sidewalls 309 and the edge of the upper surface is shown. Through the gap, the base 308 of the cable tray 307 is shown. When several platforms are bought together to form the array the cable trays 307 link up to form an uninterrupted cable tray.

Figure 10 shows a view of the underside of the apparatus shown in figure 1. The platforms 301,401 are joined together by brackets 201 .The brackets at the centre of the array are connected to four adjacent platforms. The brackets 201 around the perimeter of the array are attached to either two or three platforms 301.

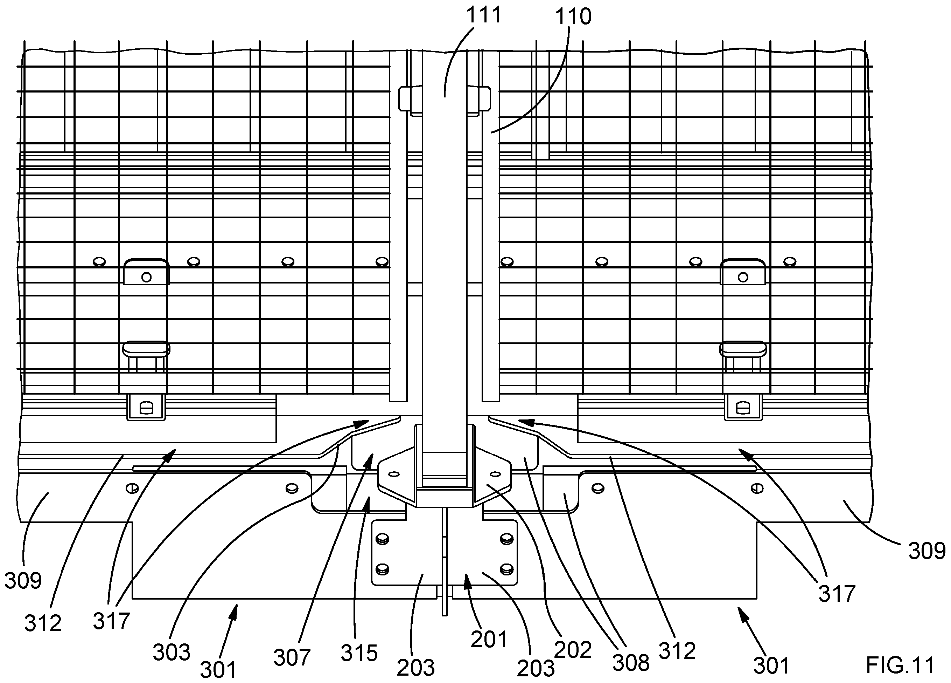

Figure 11 shows a detail view of a side perspective view of a portion of the apparatus shown in figure 1. The bracket 201 is shown attached to two adjacent platforms 301. The bolts holding the platforms to the two leaves 203 of the bracket 201 are not shown for clarity. The cut-out 315 in the floor of the cable tray is shown. The base 308 of the cable tray 307 is shown. In use, cables are supported on this base. The cut-out 303 in the supporting surface 302 is also shown. The upper plate 202 of the bracket is at the same height above the floor as the supporting surface 302 of the platform. The gap formed by the cut-out 303 and the upper plate of the bracket 202 allows a user to add and remove cables (from apparatus installed on the platform) to/from the cable tray 307.

The support surface comprises overhanging portions 317 which overhang the cable tray 307. That is, in a plan view, the overhanging portions 317 extend to the outer edges 312 to obscure a portion of the cable tray. A portion of the cable tray 307 (more specifically the cable tray base 308) is however still seen through the gap between the sidewall 309 and the edge 312 of the supporting surface. This is clear from the plan view of figure 9. The overhanging portion allows the supporting surface to be as large as possible. This provides a user with space to walk on the platform, whilst still providing good protection for cables in the cable tray. The protection of the cables arises from the increased area of the supporting surface making it less likely that heavy objects will fall into the cable tray to damage cables therein.

A post for a guard rail 111 is attached to the upper plate 202 of the bracket 201. A guard rail 110 is attached to the post 111.

The sidewalls 309 are provided with holes along their length. This provides further points for connection between adjacent platforms. This is useful if extra rigidity is needed, The holes may also be used to attach further components to the platform, such as supports for strengthening a guard rail.

## Claims

1. A platform (301) for supporting a production-line component comprising;
a base (316) for supporting the platform on a floor surface,
a load bearing surface (302) for supporting a production-line component,
a cable tray (307) between the load bearing surface and the base, and
connecting means (313) for connecting the platform to a second identical platform to form an array,
**characterized in that**;
the cable tray runs around the perimeter of the platform,
**in that**
when the platform is connected to a second identical platform in a tessellating arrangement, the load bearing surfaces of the platforms define an opening through which cables may be introduced into, and removed from, the cable trays,
and **in that**
the load bearing surface comprises a portion which overhangs at least a portion of the cable tray.

2. A platform according to any preceding claim wherein the platform is generally square, rectangular, triangular or hexagonal.

3. A platform according to any preceding claim wherein the cable tray runs generally parallel to an outer edge of the load bearing surface.

4. A platform according to any preceding claim wherein the base comprises the connecting means.

5. A platform according to any preceding claim wherein the cable tray comprises an aperture (315) arranged to allow a user to access to the connecting means when the platform is brought together in a tessellating arrangement with a second identical platform.

6. A platform according to any preceding claim wherein the connecting means is located at, or near to, a corner of the platform.

7. A platform according to any preceding claim wherein one or more struts (306) are attached to the load bearing surface, wherein production-line components may be slidably mounted on the one or more struts.

8. A platform according to any of the preceding claims wherein the cable tray comprises an aperture (311) through which excess cable may be fed, wherein the aperture is arranged so that excess cable which is fed through the aperture may be stowed under the load bearing surface.

9. A platform according to any preceding claim wherein the load bearing surface comprises a cutaway portion (303) to provide improved access to the connecting means and/or the cable tray when the platform is connected to a second identical platform in a tessellating arrangement.

10. A platform according to any preceding claim wherein the cable tray has an upstanding sidewall (309) which, when the platform is connected to a second identical platform in a tessellating arrangement, abuts the sidewall of the second identical platform.

11. An array comprising two or more platforms according to any of claims 1 to 10 which are connected together.

12. An array according to claim 11 wherein a robot (107) is supported on one or more of the platforms, wherein the robot is optionally a palletizer robot.

## Patentansprüche

1. Plattform (301) zum Tragen einer Fertigungsstreckenkomponente, umfassend:
eine Basis (316) zum Tragen der Plattform auf einer Fußbodenfläche,
eine lasttragende Fläche (302) zum Tragen einer Fertigungsstreckenkomponente,
eine Kabelrinne (307) zwischen der lasttragenden Fläche und der Basis, und
Verbindungsmittel (313) zum Verbinden der Plattform mit einer zweiten, identischen Plattform, um ein Feld zu bilden,
**dadurch gekennzeichnet, dass**:
die Kabelrinne um den Umfang der Plattform verläuft,
dadurch, dass
wenn die Plattform in einer tesselierten Anordnung mit einer zweiten, identischen Plattform verbunden ist, die lasttragenden Flächen der Plattformen eine Öffnung definieren, durch die Kabel in die Kabelrinnen eingeführt und daraus entnommen werden können,
und dadurch, dass
die lasttragenden Fläche einen Abschnitt umfasst, der über mindestens einen Abschnitt der Kabelrinne übersteht.

2. Plattform nach einem der vorangehenden Ansprüche, wobei die Plattform allgemein quadratisch, rechteckig, dreieckig oder sechseckig ist.

3. Plattform nach einem der vorangehenden Ansprüche, wobei die Kabelrinne allgemein parallel zu einer Außenkante der lasttragenden Fläche verläuft.

4. Plattform nach einem der vorangehenden Ansprüche, wobei die Basis die Verbindungsmittel umfasst.

5. Plattform nach einem der vorangehenden Ansprüche, wobei die Kabelrinne eine Aussparung (315) umfasst, die dazu angeordnet ist, es einem Benutzer zu ermöglichen, auf die Verbindungsmittel zuzugreifen, wenn die Plattform in einer tesselierten Anordnung mit einer zweiten, identischen Plattform zusammengebracht wird.

6. Plattform nach einem der vorangehenden Ansprüche, wobei sich die Verbindungsmittel an oder in der Nähe einer Ecke der Plattform befinden.

7. Plattform nach einem der vorangehenden Ansprüche, wobei eine oder mehrere Streben (306) an der lasttragenden Fläche befestigt sind, wobei Fertigungsstreckenkomponenten verschiebbar auf der einen oder den mehreren Streben angebracht werden können.

8. Plattform nach einem der vorangehenden Ansprüche, wobei die Kabelrinne eine Aussparung (311) umfasst, durch die überschüssiges Kabel eingeschoben werden kann, wobei die Aussparung derart angeordnet ist, dass überschüssiges Kabel, das durch die Aussparung eingeschoben wird, unter der lasttragenden Fläche verstaut werden kann.

9. Plattform nach einem der vorangehenden Ansprüche, wobei die lasttragende Fläche einen weggeschnittenen Abschnitt (303) umfasst, um besseren Zugang zu den Verbindungsmitteln und/oder der Kabelrinne bereitzustellen, wenn die Plattform in einer tesselierten Anordnung mit einer zweiten, identischen Plattform verbunden ist.

10. Plattform nach einem der vorangehenden Ansprüche, wobei die Kabelrinne eine aufrechte Seitenwand (309) aufweist, die, wenn die Plattform in einer tesselierten Anordnung mit einer zweiten, identischen Plattform verbunden ist, an der Seitenwand der zweiten, identischen Plattform angrenzt.

11. Feld, umfassend zwei oder mehr Plattformen nach einem der Ansprüche 1 bis 10, die miteinander verbunden sind.

12. Feld nach Anspruch 11, wobei ein Roboter (107) auf einer oder mehreren der Plattformen getragen wird, wobei es sich bei dem Roboter optional um einen Palettierroboter handelt.

## Revendications

1. Plateforme (301) servant à supporter un composant de chaîne de production comportant :
une base (316) servant à supporter la plateforme sur une surface de sol,
une surface portante (302) servant à supporter un composant de chaîne de production,
un chemin de câbles (307) entre la surface portante et la base, et
un moyen de liaison (313) servant à relier la plateforme à une deuxième plateforme identique pour former un groupement,
**caractérisée en ce que** :
le chemin de câbles s'étend autour du périmètre de la plateforme, **en ce que**
quand la plateforme est reliée à une deuxième plateforme identique selon un agencement en mosaïque, les surfaces portantes des plateformes définissent une ouverture au travers de laquelle des câbles peuvent être introduits dans les chemins de câbles, et retirés en provenance de ceux-ci,
et **en ce que**
la surface portante comporte une partie qui surplombe au moins une partie du chemin de câbles.

2. Plateforme selon l'une quelconque des revendications précédentes, dans laquelle la plateforme est généralement carrée, rectangulaire, triangulaire ou hexagonale.

3. Plateforme selon l'une quelconque des revendications précédentes, dans laquelle le chemin de câbles s'étend généralement de manière parallèle par rapport à un bord extérieur de la surface portante.

4. Plateforme selon l'une quelconque des revendications précédentes, dans laquelle la base comporte le moyen de liaison.

5. Plateforme selon l'une quelconque des revendications précédentes, dans laquelle le chemin de câbles comporte un orifice (315) agencé pour permettre à un utilisateur d'accéder au moyen de liaison quand la plateforme est rassemblée selon un agencement en mosaïque avec une deuxième plateforme identique.

6. Plateforme selon l'une quelconque des revendications précédentes, dans laquelle le moyen de liaison est situé au niveau, ou à proximité, d'un coin de la plateforme.

7. Plateforme selon l'une quelconque des revendications précédentes, dans laquelle une ou plusieurs entretoises (306) sont attachées à la surface portante, dans laquelle les composants de chaîne de production peuvent être montés de manière coulissante sur lesdites une ou plusieurs entretoises.

8. Plateforme selon l'une quelconque des revendications précédentes, dans laquelle le chemin de câbles comporte un orifice (311) au travers duquel tout excès de câble peut être introduit, dans laquelle l'orifice est agencé de telle sorte que l'excès de câble qui est introduit au travers de l'orifice peut être rangé sous la surface portante.

9. Plateforme selon l'une quelconque des revendications précédentes, dans laquelle la surface portante comporte une partie de découpe (303) servant à fournir un accès amélioré au moyen de liaison et/ou au chemin de câbles quand la plateforme est reliée à une deuxième plateforme identique selon un agencement en mosaïque.

10. Plateforme selon l'une quelconque des revendications précédentes, dans laquelle le chemin de câbles a une paroi latérale verticale (309) qui, quand la plateforme est reliée à une deuxième plateforme identique selon un agencement en mosaïque, vient prendre appui contre la paroi latérale de la deuxième plateforme identique.

11. Groupement comportant deux plateformes ou plus selon l'une quelconque des revendications 1 à 10 qui sont reliées ensemble.

12. Groupement selon la revendication 11, dans lequel un robot (107) est supporté sur une ou plusieurs des plateformes, dans lequel le robot est éventuellement un robot palettiseur.
